# EUROPEAN PATENT SPECIFICATION

(11) **EP 4 397 872 B1**
(45) Date of publication and mention of the grant of the patent: **11.03.2026**
(21) Application number: 23150628.8
(22) Date of filing: 06.01.2023
(51) Int. Cl.: F16C 11/06, B60S 1/24

(54) **BALL-JOINT ASSEMBLY OF A CRANK AND A CONNECTING ROD OF A WINDSHIELD WIPER MODULE**
KUGELGELENKANORDNUNG EINER KURBEL UND EINER PLEUELSTANGE EINES SCHEIBENWISCHERMODULS
ENSEMBLE D'UNE MANIVELLE ET D'UNE BOÎTE À ROTULE D'UNE BIELLE D'UN MODULE D'ESSUIE-GLACE

(43) Date of publication of application: 10.07.2024
(73) Proprietor: Valeo Systèmes d'Essuyage, 78322 Le Mesnil Saint Denis (FR)
(72) Inventor: SPIECHA, Antoni, 32 050 Skawina (PL); PRUCIAK, Tomasz, 32 050 Skawina (PL)
(74) Representative: Valeo Visibility

(56) References cited:
- DE-U1- 202015 101 103
- GB-A- 1 121 004
- US-A- 5 680 792

## Description

The present invention relates to the field of the windshield wiper module, and more particularly concerns the ball-joint assembly of such modules.

A windshield wiper module comprises a wiper drive unit whose shaft is connected to two linkage subsystems respectively connected to a wiper shaft rotatably supported in a support member. Said support members and a support member of the wiper drive unit are fixed to the frame of the vehicle.

Linkage subsystems extend between the wiper drive unit and the wiper shaft and comprise a connecting rod linked to a first crank fixed to the shaft of the wiper drive unit and a second crank fixed to the wiper shaft, at least one of the connections between the connecting rod and a crank being a ball-joint assembly. Linkage subsystems transfer rotational motion of the shaft of the wiper drive unit into synchronized oscillatory movement of the wiper shafts. The document US 5,680,792 A discloses a ball-joint for a linkage, as known in the state of the art.

Some of these modules are pre-mounted such that they arrive in one piece on the vehicle production lines, with stiffening bars between the support member for the drive unit and each support member for the wiper shaft. Only support members for the wiper drive unit and the wiper shaft are to attach to the frame of the vehicle. The at least one ball-joint assembly is made in a specific workshop, with an appropriate stamping press that allows a crankpin of the crank to be force-fitted into a cage of the connecting rod.

But simplified systems, without a stiffening bar between the axles, are now designed and their installation on the vehicle, while allowing greater flexibility in the position of the axles in relation to each other, also implies having to achieve the ball-joint assembly on site, where stamping press cannot be used.

It is thus sought to design ball-joint assemblies that allow assembly directly on vehicle production lines involving less effort, and notably minimizing the need for hand or power tools.

The invention is therefore directed towards a ball-joint assembly comprising a crank, a connecting rod of a windshield wiper module, a crankpin being fixed to the crank and a ball-joint housing comprising a socket being configured to receive the crankpin, said socket being fixed in an opening disposed at an end of the connecting rod, wherein the socket is made in two parts assembled one with the other, with a first part being overmolded on the opening of the end of the connecting rod and a second part being fitted on the crankpin, said first part having a hole configured to receive the second part, the second part comprising a plurality of elastic fingers forming first lateral projections and a shoulder forming a second lateral projection.

Providing the socket in two separate parts makes it possible for an operator on the vehicle assembly line to make the ball-joint assembly without too much effort, and in certain advantageous embodiments by hand (*i.e.* without requiring hand tools, powered or otherwise), but without the risk of having a joint between the socket and the crankpin which is not sufficiently resilient. Here, the second part of the socket may be fitted with an appropriate press which avoids damaging or otherwise deforming the cylindrical form of the part of the socket surrounding the spherical portion of the crankpin. Moreover, overmolding the first part on the connecting rod makes it such that, during the assembly process, all contact occurs between two plastic parts (*i.e.* the two portions of the socket), rather than between a plastic socket fitted to the crankpin and the metallic edges delimiting the opening of the connecting rod. The forces generated at the junction of the connecting rod and the crank are thus more efficiently passed without the risk of damage for the plastic socket.

According to an aspect of the invention, the first part has a generally cylindrical form extending along an axis of revolution.

According to an aspect of the invention, the first part covers the entire perimeter of the opening of the end of the connecting rod.

According to an aspect of the invention, the first part comprises a top portion and a bottom portion, the top and bottom portions being arranged on opposing faces of the end of the connecting rod, the top and bottom portions both having a diameter greater than the diameter of the opening of the end of the connecting rod.

According to an aspect of the invention, the first part has a first radial dimension in a first direction parallel to an axis of elongation of the connecting rod and a second radial dimension in a second direction perpendicular to said first direction, said first radial dimension being greater than said second radial dimension.

According to an aspect of the invention, the second part has a base portion, next to the crank, whose form is a continuous annular band.

According to an aspect of the invention, the first part and the second part are secured by snap-fitting means.

According to an aspect of the invention, a summit portion of the second part forms a ramp configured to facilitate insertion into the first part.

According to an aspect of the invention, the first and the second part are made with different materials.

According to an aspect of the invention, the second part is fabricated from a material with a lower coefficient of friction than the material from which the first part is fabricated.

According to a second aspect, the invention is directed towards a vehicle comprising a windshield wiper module with a ball-joint assembly as described above.

According to a third aspect, the invention is directed towards a process of assembly of a windshield wiper module comprising a ball-joint assembly as described above, comprising at least:
- a step of overmolding a first part of a socket on the end of a connecting rod of the windshield wiper module,
- a step of fitting a second part of the socket on a crankpin of a crank of the windshield wiper module,
- a step of joining the connecting rod and the crank by snapping the two parts of the socket together.

Such a process makes it possible to carry out each of the steps in different places, with different tools. The overmolding step can be performed with the connecting rod alone, in a simple-to-use mold. The fitting step can be carried out in a specific workshop with a press generating higher force than can be produced manually by an operator. Finally, the assembly step of the two distinct parts of the socket can be done directly on the assembly line of the vehicle by an operator, without requiring excessive effort or the use of tools.

Other characteristics and advantages of the invention will become apparent from the following description of several examples of implementation given by way of indication and not as a limitation with reference to the attached schematic drawings, wherein:
Figure 1 illustrates a windshield wiper module implementing a ball-joint assembly according to the invention;
Figure 2 is a detail view of the module of figure 1, showing an end of a connecting rod and an end of a crank linked by a ball-joint assembly according to the invention;
Figure 3 is a sectional view of the components visible in figure 2;
Figure 4 is a view of the components of figure 2, prior to their assembly, to make visible a two-part socket with a part overmolded on the end of the connecting rod and a part mounted on the crank;
Figure 5 is an exploded view of the components of the crank, namely the crankpin and the part of the socket mounted on the crank; and
Figure 6 is a sectional view of another location of the ball-joint assembly according to the invention.

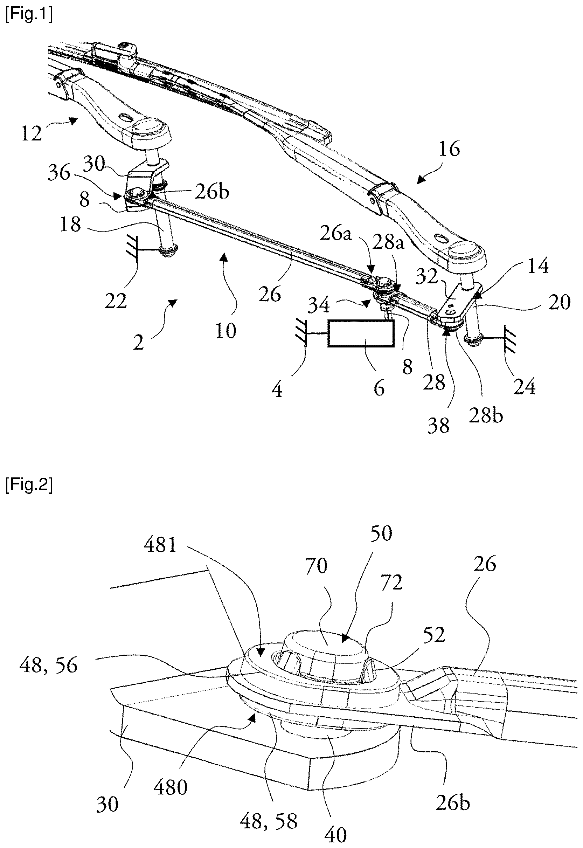

Figure 1 shows a linkage system for actuating windshield wipers of a motor vehicle, called system 2 hereafter. When mounted in a motor vehicle, the system 2 is typically fixed to the frame of the vehicle by brackets here schematically illustrated.

A first bracket 4 supports an electric gear motor 6, schematically illustrated, the output shaft 8 of which is intended to drive a first linkage subsystem 10 for a first windshield wiper 12 and a second linkage subsystem 14 for a second windshield wiper 16, windshield wipers 12, 16 each comprising a wiper arm for actuating a wiper blade.

A longitudinal end of the wiper arm is secured to a drive shaft 18, 20, whose position next to the windshield is fixed by brackets 22, 24, the opposite longitudinal end of the wiper arm being connected to the wiper blade.

Each linkage subsystem 10, 14 extends from the output shaft 8 of the motor 6 to one of the drive shafts 18, 20 and comprises a connecting rod 26, 28 and a crank 30, 32. As illustrated, a first linkage subsystem 10 comprises a first connecting rod 26 and a first crank 30 and a second linkage subsystem 14 comprises a first connecting rod 28 and a second crank 32.

The connecting rods 26, 28 have a substantially rectilinear elongated general shape extending along an axis of elongation A between a first longitudinal end 26a, 28a and a second longitudinal end 26b, 28b. The connecting rods are for example made by *e.g.* stamping or forging, and present an embossed central portion and planar longitudinal ends.

The first longitudinal end 26a, 28a of the connecting rod 26, 28 of a linkage subsystem 10, 14 is hinged to the output shaft 8 of the electric gear motor 6 by a first ball-joint assembly 34 and the second longitudinal end 26b, 28b is hinged to a first end of the crank 30, 32 of the said linkage subsystem by a second ball-joint assembly 36, 38.

The second end of the crank 30, 32 is integrally connected in rotation with the drive shaft of the corresponding windshield wiper.

Each ball-joint assembly 34, 36, 38 is made with a ball-joint housing, which comprises fixing means to the connecting rod, and a crankpin fixed to the crank. The crankpin is shaped to be received at least partly in an internal cavity of the ball-joint housing which has corresponding form and dimensions.

More particularly, the crankpin has a spherical portion whose dimensions, i.e. diameter, are equal to corresponding dimensions of the internal cavity of the ball-joint housing.

As previously mentioned, the invention is relative to a ball-joint assembly wherein the ball-joint housing is a socket which is made in two parts assembled one with the other, with a first part fixed to the end of the connecting rod (in particular by overmolding) and a second part fixed to the crankpin. Such a two-part socket configuration is advantageous in a context where an operator must manually ensure the connection between the connecting rod and the crank.

The invention relating to a particular form of a ball-joint assembly will be described more particularly with reference to the ball-joint assembly arranged between the first connecting rod and the first crank of the first linkage subsystem, as illustrated in figure 2, but it should be noted that it could be implemented in a similar manner at every ball-joint assembly of the system 2.

Figure 2 illustrates that the ball-joint assembly comprises a crankpin 40 fixed to the first end of the crank 30 and a socket 42 forming the ball-joint housing as mentioned, with one part fixed to the second end 26b of the connecting rod 26. The ball-joint assembly allows a rotational movement of the crankpin relative to the socket around three axes.

The socket is made of plastic while both crankpin 40 and end of the connecting rod 26 are metallic.

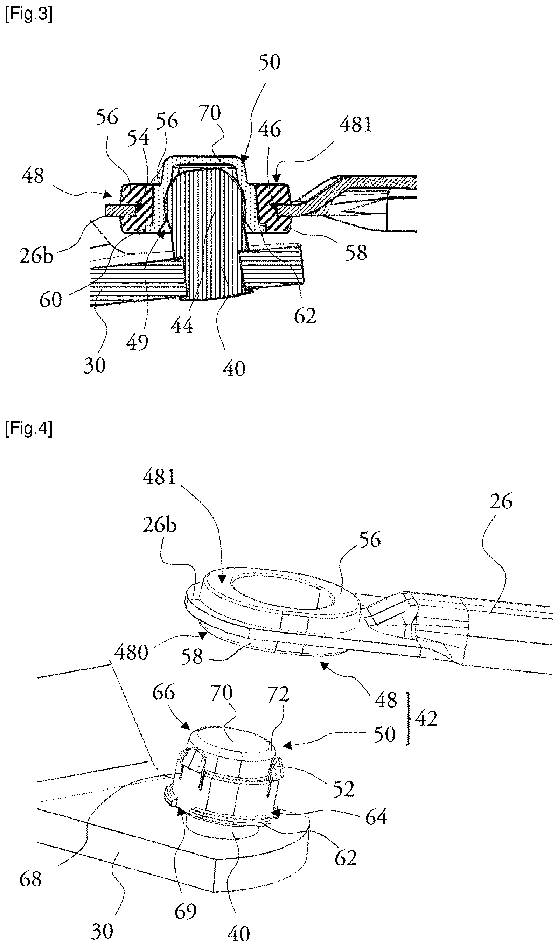

Figure 3 illustrates, with a cross-sectional view, the form of the parts of the crankpin and the socket which cooperate and illustrates the feature of the invention of a socket made in two parts.

The crankpin 40 has a spherical portion 44, and the socket 42 is configured to both receive the spherical portion of the crankpin 40 and to be fixed to the connecting rod, in an opening 46 at the end of such connecting rod.

As mentioned above, the socket 42 is made in two parts. A first part 48, also called the receiving part, is fixed to the connecting rod 26, and a second part 50, also called the housing part, is received in the receiving part of the socket 42 and arranged to surround the spherical portion 44 of the crankpin 40.

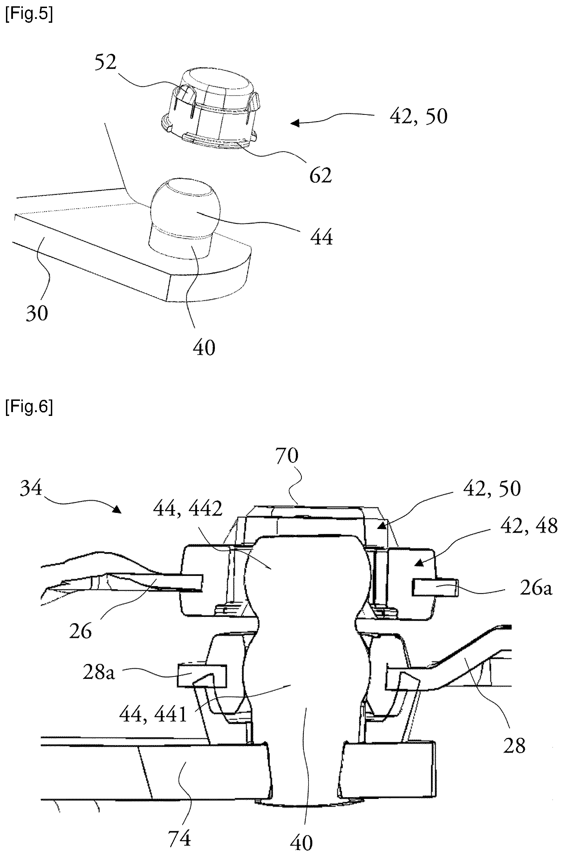

The connection of the connecting rod 26 and the crank 30 is realized by assembling, by a snapped connection, the first and second parts 48, 50 of the socket 42. Here, as it may be seen clearer in the figures 4 and 5, the second part 50 has snap-fitting means 52, here elastic fingers, which makes abutment when the second part 50 is fixed to the first part 48. Of course, it will be understood that snap-fitting means could be carried by the first part instead, in other embodiments.

The first part 48 of the socket 42 is overmolded on the end of the connecting rod. The step of overmolding is made in a specific factory or workshop, prior to the assembly of the vehicle. On the other hand, the assembly of the connecting rod 26 and the first part 48 of the socket 42 to the second part 50 of the socket 42 is performed on the vehicle assembly line.

The first part 48 has a generally cylindrical form extending along an axis of revolution. The first part 48 of the socket 42 extends, according to this axis of revolution, on either side of the end of the connecting rod 26, such that the planar surface of this end is in a groove 54 of the first part of the socket. Said groove 54 is between a top portion 56 of the first part, arranged on one side of the connecting rod, and a bottom portion 58 of the first part, arranged on the other side of the connecting rod, both portions having the same axial thickness. The overmolding obtains radial dimensions of both portions 56, 58 of the first part that are greater than the corresponding dimensions of the opening of the end of the connecting rod. This ensures that the first part 48 of the socket 42 is securely attached to the connecting rod.

The first part 48 of the socket 42 is arranged with a hole 49 forming an internal cavity, said cavity extending all along the axial dimension of the socket and being suitable for receiving the second part. At the bottom end 480 of the first part 48 of the socket, i.e. the end of the socket which is intended to be next to the crank, the dimension of the hole 49 is enlarged, to form a counterbore 60 arranged to receive a shoulder of the second part of the socket which will be described now in reference to figure 3.

The second part 50 of the socket 42 is fitted to the spherical portion of the crankpin. The step of fitting around the crankpin is performed beforehand, in a specific factory or workshop, and the set formed by the crank and the second part 50 of the socket 42 is subsequently connected to the first part 48 of the socket 42 on the assembly line of the vehicle.

The second part 50 of the socket comprises snap-fitting means 52, arranged at regular intervals on the circumference of the socket. The snap-fitting means are constituted by elastic fingers that extend axially along the second part 50 and which form radially first lateral projections. The head of the snap-fitting means 52 is located next to a top wall 70 of the second part 50, i.e. the end of the second part which is opposite to the crank 30, 32, and the axis of articulation 53 of the elastic fingers is located at the center of the second part, considering the axial dimension to be recovered by the first part when both parts are snapped together. During the insertion of the second part 50 into the first part, the snap-fitting means are constrained by the wall delimiting the hole 49 in the first part.

The second part 50 of the socket also comprises a shoulder 62 forming a second lateral projection at the bottom end of the second part. The axial distance between snap-fitting means 52 and the shoulder 62 is lower than the axial dimension of the first part 48 and equal to the axial dimension between the counterbore 60 and the top end 481 of the first part 48, opposite to the bottom end 480 of said first part. Such counterbore 60 is radially dimensioned to correspond to the radial dimension of the shoulder. As illustrated in figure 3, when the second part 50 is inserted in the first part 48, the counterbore 60 is a housing for the shoulder 62 which comes in abutment against a top surface of the counterbore.

In this axial position, the snap-fitting means 52, here the elastic tongues, are sufficiently beyond the top end 481 of the first part 48 to take their original position and to form an axial abutment against the top end 481 of the first part 48 in an opposite direction of the axial abutment made by the shoulder. The first part 48 is fixed to the second part, between both lateral projections of the second part 50.

The first part and the second part of the socket are preferably fabricated from the same material, and more particularly a material which has low friction and good wear qualities. In particular, engineering plastics such as PTFE, PEEK, POM, polyimide, nylon, and UHMW PE may be preferred for the first and second parts of the socket. In a possible variant, the first and/or second part of the socket may be filled with a charge material to improve its wear characteristics, such as a glass or carbon fibers; or filled/impregnated with a lubricant reduce friction, for instance graphite, molybdenum disulfide, or oil. The skilled person will be capable of determining the optimal composition and configuration for any given implementation of the invention.

In particular embodiments, it may be that the socket is made with different materials from one part to the other. In that context, the second part 50 which must surround the spherical portion 44 of the crankpin 40 is made of a material with lower friction properties than the material used for the first part 48 which is overmolded and only must cooperate with the second part 50.

It must be noted that the second part here is interacting with the first part of the socket and not with the opening of the connecting rod. Such a feature allows a better distribution of efforts at the junction between the connecting rod and the crank because the first part, made of plastic, interacts with another part, also made of plastic, and the second part is thus not sheared by the longitudinal forces generated by the first part due to the motor drive.

Figures 4 and 5 illustrates both first part and second part of the socket during different steps of the process of assembly. These figures make visible other characteristics of these two parts of the socket.

Figure 4 illustrates that the first part 48 of the socket 42 covers the entire perimeter of the opening 46 of the end 26b of the connecting rod 26.

The first part 48 has a first radial dimension in a first direction parallel to an axis of extension of the connecting rod 26, which is greater than a second radial dimension of this first part 48 in a second direction perpendicular to said first direction. There are more longitudinal forces, parallel to the longitudinal direction of the connecting rod, which is applied to the junction between the connecting rod and the crank than transversal forces and the difference between these radial dimensions allows to deal appropriately with these forces.

Moreover, the first part 48 has an opening with a circular cross section, instead of an oblong cross section as with the opening of the connecting rod. The interaction with the second part 50 which has a circular outer diameter is thus optimized and the forces are better distributed.

Figure 4 also represents clearly the second part 50 of the socket 42.

The second part 50 has a base portion 64, next to the crank, and a summit portion 66. The base portion 64 is configured to be surrounded by the first part when the windshield wiper module is fixed to the vehicle and the summit portion 66 is beyond the first part opposite to the crank.

The base portion 64 is a continuous annular band which comprises the shoulder 62 at the bottom end of the second part. Only the slots 68, which help to form the snap-fitting means, are arranged on this continuous annular band. In the embodiment illustrated on figure 4, the shoulder 62 is interrupted by the cutouts 69.

The summit portion 66 is here closed by a top wall 70 to prevent the infiltration of dirt, water, and dust. The summit portion 66 has a wall 72 between the base portion and the top wall which is inclined in relation to the annular band of the base portion to form a ramp to facilitate insertion of this summit portion 66 and then the base portion 64 into the first part. The snap-fitting means are arranged to be prominent, protruding from the sloped wall of the summit portion 66.

The step of assembling the two parts of the socket can thus be easily performed by the operator on the vehicle assembly line, by inserting the second part of the socket effortlessly into the first part, thanks to the sloped surface formed in the summit portion of the second part. The snap-fitting means retract inside the second part thanks to the slots formed in the base portion and allow the insertion of the second part into the first part. The operator knows when to stop the insertion since the shoulder 62 meets the counterbore 60. In this position, the snap-fitting means are disengaged, and they elastically return to their original shape to ensure the axial locking in the other direction.

Figure 5 shows another step of the assembly, which is made in another location, in a specific workshop and not on the assembly line of the vehicle. The second part of the socket must be fitted on the crankpin, and this second part may be fitted to the crankpin with an appropriate press such that there is no need to plan large cutouts in the annular band to improve its elasticity.

In accordance with the preceding description, the junction between the connecting rod and the crank of the first or second linkage system may be implemented with such a socket made in two parts. The invention can also be implemented at the junction of the connecting rods to the motor output shaft 8. Figure 6 shows such an embodiment.

The output shaft, here not shown, is fixed to a lever 74 with a specific crankpin 40 which has two spherical portions 44 with a first spherical portion 441 next to the lever 74 and a second spherical portion 442. The junction between a linkage subsystem and the second spherical portion 442 is the same as the one described before, with a socket in two parts 48, 50 and the second part 50 which has a top wall 70 preventing the entry in the second part of dirt, water, and dust.

It must be understood that the junction between the other linkage subsystem with the first spherical portion might be identical to the two-part socket junction as described before, with just an arrangement of the top wall of the second part. Such top wall would be located between the two spherical portions, and it would be necessary to provide an opening in this top wall to allow the specific crankpin to pass through the top wall.

The invention, as just described, achieves its intended purpose by providing a ball-joint assembly which is efficient to pass forces at the junction between a connecting rod and a crank and which is easy to assembly for an operator on the assembly line. Of course, the invention is not limited to the examples just described, and many adjustments can be made to these examples without leaving the scope of the invention as defined by the appended claims.

## Claims

1. A ball-joint assembly (34, 36, 38) of a windshield wiper module, comprising a crank (30, 32), a connecting rod (26, 28), a crankpin being (40) fixed to the crank (30, 32) and a ball-joint housing comprising a socket (42) configured to receive the crankpin (40), said socket (42) being fixed in an opening (46) disposed at an end of the connecting rod (26, 28), the socket (42) being made in two parts (48, 50) assembled one with the other, with a first part (48) being overmolded at the opening (46) of the end of the connecting rod (26, 28) and a second part (50) being fitted on the crankpin (40), said first part (48) having a hole (49) configured to receive the second part (50), **characterized in that** the second part (50) comprises a plurality of elastic fingers forming first lateral projections and a shoulder (62) forming a second lateral projection.

2. The ball-joint assembly (34, 36, 38) of claim 1, wherein the first part (48) has a generally cylindrical form extending along an axis of revolution.

3. The ball-joint assembly (34, 36, 38) of any one of the preceding claims, wherein the first part (48) covers the entire perimeter of the opening (46) of the end of the connecting rod (26, 28).

4. The ball-joint assembly (34, 36, 38) of any one of the preceding claims, wherein the first part (48) comprises a top portion (56) and a bottom portion (58), the top and bottom portions (56, 58) being arranged on opposing faces of the end of the connecting rod, the top and bottom portions (56, 58) both having a diameter greater than a corresponding diameter of the opening (46) of the end of the connecting rod (26, 28).

5. The ball-joint assembly (34, 36, 38) of any one of the preceding claims, wherein the first part (48) has a first radial dimension in a first direction parallel to an axis of elongation of the connecting rod (26, 28) and a second radial dimension in a second direction perpendicular to said first direction, said first radial dimension being greater than said second radial dimension.

6. The ball-joint assembly (34, 36, 38) of any one of the preceding claims, wherein the second part (50) has a base portion (64), next to the crank (30, 32), whose form is a continuous annular band.

7. The ball-joint assembly (34, 36, 38) of any one of the preceding claims, wherein the first part (48) and the second part (50) are secured by snap-fitting means (52).

8. The ball-joint assembly (34, 36, 38) of any one of the preceding claims, wherein a summit portion (66) of the second part (50) forms a ramp configured to facilitate insertion into the first part (48).

9. The ball-joint assembly (34, 36, 38) of any one of the preceding claims, wherein the first and the second parts (48, 50) are made from different materials.

10. The ball-joint assembly (34, 36, 38) of claim 9, wherein the second part (50) is fabricated from a material with a lower coefficient of friction than the material from which the first part (48) is fabricated.

11. Vehicle comprising a windshield wiper module with a ball joint assembly (34, 36, 38) according to any one of the preceding claims.

12. Method for assembling a windshield wiper module comprising a ball-joint assembly according to any one of claims 1 to 10, the method comprising at least:
- a step of overmolding a first part (48) of a socket (42) on the end of a connecting rod (26, 28) of the windshield wiper module,
- a step of fitting a second part (50) of the socket (42) on a crankpin (40) of a crank (30, 32) of the windshield wiper module,
- a step of joining the connecting rod (26, 28) and the crank (30, 32) by snapping the two parts (48, 50) of the socket (42) together.

## Patentansprüche

1. Eine Kugelgelenkbaugruppe (34, 36, 38) eines Scheibenwischermoduls, umfassend eine Kurbel (30, 32), eine Verbindungsstange (26, 28), einen Kurbelzapfen (40), der an der Kurbel (30, 32) befestigt ist, und ein Kugelgelenkgehäuse, das eine Aufnahme (42) umfasst, die konfiguriert ist, um den Kurbelzapfen (40) aufzunehmen, wobei die Aufnahme (42) in einer Öffnung (46) befestigt ist, die an einem Ende der Verbindungsstange (26, 28) angeordnet ist, wobei die Aufnahme (42) aus zwei Teilen (48, 50) besteht, die miteinander verbunden sind, wobei ein erster Teil (48) an der Öffnung (46) des Endes der Verbindungsstange (26, 28) umspritzt ist und ein zweiter Teil (50) auf den Kurbelzapfen (40) aufgesetzt ist, wobei der erste Teil (48) ein Loch (49) aufweist, das konfiguriert ist, um den zweiten Teil (50) aufzunehmen, **dadurch gekennzeichnet, dass** der zweite Teil (50) eine Vielzahl von elastischen Fingern umfasst, die erste seitliche Vorsprünge bilden, und eine Schulter (62), die einen zweiten seitlichen Vorsprung bildet.

2. Kugelgelenkbaugruppe (34, 36, 38) nach Anspruch 1, wobei der erste Teil (48) eine im Allgemeinen zylindrische Form hat, die sich entlang einer Rotationsachse erstreckt.

3. Kugelgelenkbaugruppe (34, 36, 38) nach einem der vorhergehenden Ansprüche, wobei der erste Teil (48) den gesamten Umfang der Öffnung (46) des Endes der Verbindungsstange (26, 28) bedeckt.

4. Kugelgelenkbaugruppe (34, 36, 38) nach einem der vorhergehenden Ansprüche, wobei der erste Teil (48) einen oberen Abschnitt (56) und einen unteren Abschnitt (58) umfasst, wobei der obere und der untere Abschnitt (56, 58) auf gegenüberliegenden Flächen des Endes der Verbindungsstange angeordnet sind, wobei sowohl der obere als auch der untere Abschnitt (56, 58) einen Durchmesser aufweisen, der größer ist als ein entsprechender Durchmesser der Öffnung (46) des Endes der Verbindungsstange (26, 28).

5. Kugelgelenkbaugruppe (34, 36, 38) nach einem der vorhergehenden Ansprüche, wobei der erste Teil (48) eine erste radiale Abmessung in einer ersten Richtung parallel zu einer Längsachse der Verbindungsstange (26, 28) und eine zweite radiale Abmessung in einer zweiten Richtung senkrecht zu der ersten Richtung aufweist, wobei die erste radiale Abmessung größer ist als die zweite radiale Abmessung.

6. Kugelgelenkbaugruppe (34, 36, 38) nach einem der vorhergehenden Ansprüche, wobei der zweite Teil (50) einen Basisabschnitt (64) aufweist, der sich neben der Kurbel (30, 32) befindet und dessen Form ein durchgehendes ringförmiges Band ist.

7. Kugelgelenkbaugruppe (34, 36, 38) nach einem der vorhergehenden Ansprüche, wobei der erste Teil (48) und der zweite Teil (50) durch Schnappverbindungsmittel (52) gesichert sind.

8. Kugelgelenkbaugruppe (34, 36, 38) nach einem der vorhergehenden Ansprüche, wobei ein Gipfelabschnitt (66) des zweiten Teils (50) eine Rampe bildet, die konfiguriert ist, um das Einführen in den ersten Teil (48) zu erleichtern.

9. Kugelgelenkbaugruppe (34, 36, 38) nach einem der vorhergehenden Ansprüche, wobei der erste und der zweite Teil (48, 50) aus verschiedenen Materialien hergestellt sind.

10. Kugelgelenkbaugruppe (34, 36, 38) nach Anspruch 9, wobei der zweite Teil (50) aus einem Material mit einem niedrigeren Reibungskoeffizienten hergestellt ist als das Material, aus dem der erste Teil (48) hergestellt ist.

11. Fahrzeug, umfassend ein Scheibenwischermodul mit einer Kugelgelenkbaugruppe (34, 36, 38) nach einem der vorhergehenden Ansprüche.

12. Verfahren zum Zusammenbau eines Scheibenwischermoduls, umfassend eine Kugelgelenkbaugruppe nach einem der Ansprüche 1 bis 10, wobei das Verfahren mindestens umfasst:
- einen Schritt des Umspritzens eines ersten Teils (48) einer Aufnahme (42) auf das Ende einer Verbindungsstange (26, 28) des Scheibenwischermoduls,
- einen Schritt des Aufsetzens eines zweiten Teils (50) der Aufnahme (42) auf einen Kurbelzapfen (40) einer Kurbel (30, 32) des Scheibenwischermoduls,
- einen Schritt des Verbindens der Verbindungsstange (26, 28) und der Kurbel (30, 32) durch Einschnappen der beiden Teile (48, 50) der Aufnahme (42) ineinander.

## Revendications

1. Un ensemble de joint à rotule (34, 36, 38) d'un module d'essuie-glace, comprenant une manivelle (30, 32), une bielle (26, 28), un axe de manivelle (40) fixé à la manivelle (30, 32) et un boîtier de joint à rotule comprenant une douille (42) configurée pour recevoir l'axe de manivelle (40), ladite douille (42) étant fixée dans une ouverture (46) disposée à une extrémité de la bielle (26, 28), la douille (42) étant réalisée en deux parties (48, 50) assemblées l'une avec l'autre, avec une première partie (48) surmoulée à l'ouverture (46) de l'extrémité de la bielle (26, 28) et une seconde partie (50) montée sur l'axe de manivelle (40), ladite première partie (48) ayant un trou (49) configuré pour recevoir la seconde partie (50), **caractérisé en ce que** la seconde partie (50) comprend une pluralité de doigts élastiques formant des premières projections latérales et un épaulement (62) formant une seconde projection latérale.

2. L'ensemble de joint à rotule (34, 36, 38) selon la revendication 1, dans lequel la première partie (48) a une forme généralement cylindrique s'étendant le long d'un axe de révolution.

3. L'ensemble de joint à rotule (34, 36, 38) selon l'une quelconque des revendications précédentes, dans lequel la première partie (48) couvre tout le périmètre de l'ouverture (46) de l'extrémité de la bielle (26, 28).

4. L'ensemble de joint à rotule (34, 36, 38) selon l'une quelconque des revendications précédentes, dans lequel la première partie (48) comprend une portion supérieure (56) et une portion inférieure (58), les portions supérieure et inférieure (56, 58) étant disposées sur des faces opposées de l'extrémité de la bielle, les portions supérieure et inférieure (56, 58) ayant toutes deux un diamètre supérieur à un diamètre correspondant de l'ouverture (46) de l'extrémité de la bielle (26, 28).

5. L'ensemble de joint à rotule (34, 36, 38) selon l'une quelconque des revendications précédentes, dans lequel la première partie (48) a une première dimension radiale dans une première direction parallèle à un axe d'élongation de la bielle (26, 28) et une seconde dimension radiale dans une seconde direction perpendiculaire à ladite première direction, ladite première dimension radiale étant supérieure à ladite seconde dimension radiale.

6. L'ensemble de joint à rotule (34, 36, 38) selon l'une quelconque des revendications précédentes, dans lequel la seconde partie (50) a une portion de base (64), à proximité de la manivelle (30, 32), dont la forme est une bande annulaire continue.

7. L'ensemble de joint à rotule (34, 36, 38) selon l'une quelconque des revendications précédentes, dans lequel la première partie (48) et la seconde partie (50) sont fixées par des moyens d'encliquetage (52).

8. L'ensemble de joint à rotule (34, 36, 38) selon l'une quelconque des revendications précédentes, dans lequel une portion sommitale (66) de la seconde partie (50) forme une rampe configurée pour faciliter l'insertion dans la première partie (48).

9. L'ensemble de joint à rotule (34, 36, 38) selon l'une quelconque des revendications précédentes, dans lequel les première et seconde parties (48, 50) sont fabriquées à partir de matériaux différents.

10. L'ensemble de joint à rotule (34, 36, 38) selon la revendication 9, dans lequel la seconde partie (50) est fabriquée à partir d'un matériau avec un coefficient de frottement inférieur au matériau à partir duquel la première partie (48) est fabriquée.

11. Véhicule comprenant un module d'essuie-glace avec un ensemble de joint à rotule (34, 36, 38) selon l'une quelconque des revendications précédentes.

12. Méthode d'assemblage d'un module d'essuie-glace comprenant un ensemble de joint à rotule selon l'une quelconque des revendications 1 à 10, la méthode comprenant au moins :
- une étape de surmoulage d'une première partie (48) d'une douille (42) sur l'extrémité d'une bielle (26, 28) du module d'essuie-glace,
- une étape de montage d'une seconde partie (50) de la douille (42) sur un axe de manivelle (40) d'une manivelle (30, 32) du module d'essuie-glace,
- une étape de jonction de la bielle (26, 28) et de la manivelle (30, 32) par encliquetage des deux parties (48, 50) de la douille (42) ensemble.
